# EUROPEAN PATENT SPECIFICATION

(11) **EP 2 443 939 B1**
(45) Date of publication and mention of the grant of the patent: **17.07.2013**
(21) Application number: 11186221.5
(22) Date of filing: 21.10.2011
(51) Int. Cl.: A23L 1/00, A23L 1/03, A23L 1/217, A23L 1/275

(54) **Acrylamide mitigation and color management in a potato fry**
Acrylamidminderung und Farbverwaltung bei Pommes frites
Réduction d'acrylamide et gestion de la couleur dans une friture de pommes de terre

(30) Priority: 21.10.2010 US 909260
(43) Date of publication of application: 25.04.2012
(73) Proprietor: ConAgra Foods RDM, Inc., Omaha, NE 68102 (US)
(72) Inventor: Higley, Jeremy Scott, Pasco, WA Washington 99301 (US); Hoye Jr., Clifford Louis, Pasco, WA Washington 99301 (US); Smith, Gordon Lee, Omaha, NE Nebraska 68168 (US)
(74) Representative: Hamer, Christopher K.

(56) References cited:
- EP-A1- 1 974 613
- US-A1- 2005 074 538
- US-A1- 2005 079 254
- US-A1- 2007 178 219
- US-A1- 2010 080 872

## Description

### BACKGROUND

Acrylamide is a chemical compound that is naturally formed from food components during heat treatment as a result of a Maillard reaction between asparagine and free reducing sugars. Acrylamide formation has recently been the subject of mitigation techniques by those affiliated with the potato industry. However, such experiments have failed to provide food products that have mitigated acrylamide in combination with providing acceptable organoleptic properties such as taste, color and texture.

### SUMMARY

This Summary is provided to introduce a selection of concepts in a simplified form that are further described below in the Detailed Description. This Summary is not intended to identify key and/or essential features of the claimed subject matter. Also, this Summary is not intended to limit the scope of the claimed subject matter in any manner.

Aspects of the disclosure pertain to a process for mitigating acrylamide formation in a potato fry while managing the formation of color in the potato fry. The resulting potato fry includes low acrylamide levels while exhibiting acceptable organoleptic properties such as taste, color and texture.

### DRAWINGS

FIGURE 1 is an example operational flow diagram illustrating acrylamide mitigation and color management in a potato fry;

FIGURE 2 is an example system illustrating various elements for acrylamide mitigation in association with a flume;

FIGURE 3 is an example operational flow diagram illustrating operations associated with the flume illustrated in FIGURE 2;

FIGURE 4 is an example computing system.

### DETAILED DESCRIPTION

Acrylamide is typically formed in potato fries during one or more frying operations. Heat causes a Maillard reaction between asparagine and free reducing sugars. Acrylamide formation has recently been the subject of mitigation techniques by those affiliated with the potato industry.

Prior processes for mitigating acrylamide have resulted in a potato fry with less than desirable organoleptic properties. As an example associated with color, potato fries can be identified by a particular color. For example, a golden color is many times considered an acceptable color for potato fries. During the frying process of potato fries, the frying that causes the golden color that is indicative of many potato fries is also indicative of the level of acrylamide formation in the potato fries. Stated another way, as the browning of the potato fry increases, the acrylamide levels also increase. Conversely, as the browning of the potato fry decreases, acrylamide levels also decrease. As such, many acrylamide mitigation processes result in less acrylamide formation but the resulting potato fry has a near white color after frying. The near white color is typically unacceptable.

Notwithstanding the undesirable potato fry color that results from prior acrylamide mitigation processes, prior mitigation processes are also inefficient, result in mitigation variability, and can result in a potato fry with an unacceptable taste. Typically, acrylamide mitigation occurs in a blanch system. The blanch system typically includes a volume of water. The blanch system also includes fresh water injection into the blanch system. To mitigate acrylamide, a food grade acid or calcium chloride can be added to the blanch system. The concentration of the food grade acid or calcium chloride in the blanch system is difficult to maintain consistently because the blanch system includes a relatively large volume of water and the blanch system receives fresh water on a regular basis. Accordingly, concentrations of acid or calcium chloride in the blanch system is typically in flux and requires frequent monitoring to properly mitigate acrylamide. Such active monitoring utilizes human and facility resources, creates inconsistencies in mitigation, and creates costs.

Furthermore, potatoes are blanched for a period of time in the blanch system. The typical period of time to blanch a potato is greater than the time for acrylamide mitigation. Given that the blanching time is typically the limit, potatoes are subjected to the food grade acid or calcium chloride in the blanch system for longer periods of time than necessary to mitigate acrylamide. Accordingly, there is more time for the potato to absorb the taste profile of the food grade acid or calcium chloride. The taste profile is typically unacceptable.

As more fully set forth herein, aspects of the disclosure pertain to an efficient process for acrylamide mitigation to produce a potato fry with acceptable organoleptic properties. Acrylamide mitigation is achieved by adding an acrylamide mitigating component to the batter. For example, a divalent metal salt, such as calcium chloride, can be incorporated into a surface application in an amount sufficient to interfere with the Maillard reaction and mitigate the formation of acrylamide during reconstitution. By including the acrylamide mitigation component in the surface application the quantity of the acrylamide mitigation component can be minimized in that the component is located on the potato fry at a position where the Maillard reaction occurs (i.e., the surface). As such, the flavor impact of the acrylamide mitigating component and cost associated with the acrylamide mitigation component can be mitigated.

Aspects of the disclosure also pertain to a color management operation. A color augmenter can be applied to the potato to prepare the potato fry to have a particular color value after the potato fry is reconstituted. For example, the color augmenter can include a colorant and/or a browning agent. The combination of the acrylamide mitigation operations and the color management operation result in a potato fry that is formed to create a refried potato having a golden color and mitigated acrylamide formation.

### A. METHODS AND PROCESSES

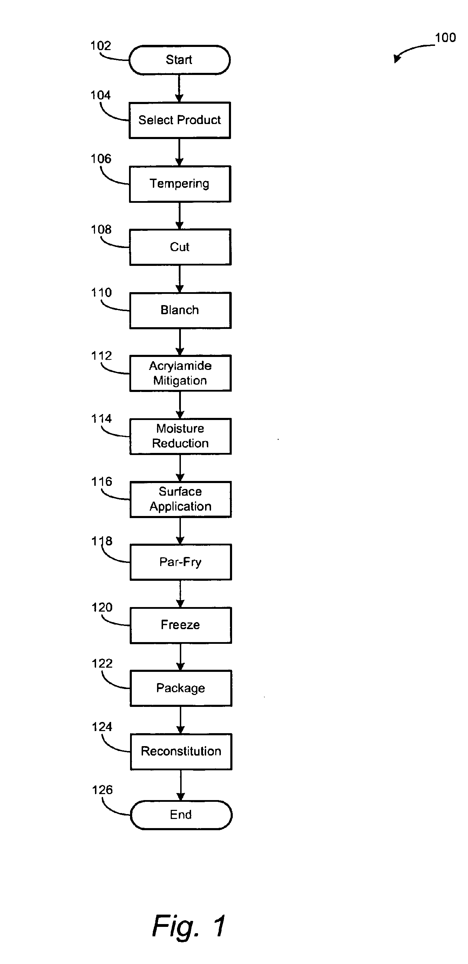

FIGURE 1 is an exemplary operational flow diagram illustrating acrylamide mitigation and color management in a potato fry. Operational flow 100 is depicted in FIGURE 1 as a series of operations. As indicated herein, the order of the operations can be rearranged or reconfigured in at least the circumstances discussed below. As also indicated, certain operations can be eliminated from the operational flow 100 depending on the starting product and the desired end product. Operations are exemplarily indicted. Certain operations can be decision operations which may or may not be utilized in operation 100 depending on the starting product, the level of acrylamide mitigation, and color management desired. Operations associated with operational flow 100 can be automatic in response to an event, manual in response to an operator determination, operator driven, software driven, and/or equipment driven. The combinations and sub-combinations are more fully set forth below.

### 1. Product Selection

Operational flow 100 begins at start operation 102 and continues to operation 104 where a raw product is selected. The raw product can be selected on any number of criteria. As an example, a raw product can be selected based on a customer's product specification for potato fries. The term "product" can be used herein to pertain to a raw food item, a starting food item, an ending food item, and/or a food item at any point in operational flow 100. The product can include a potato. Examples of potatoes include, but are not limited to, Russet potatoes, Goldrush potatoes, White potatoes, Red potatoes, Yellow potatoes, Ruby potatoes, Australian potatoes, Yukon potatoes, Peruvian Blue potatoes, Superior potatoes, Kennebec potatoes, Katchdin potatoes, and New potatoes. The potato can also include a sweet potato. Again, the above examples are not meant to be an exhaustive list, but a list of a few examples of products that can utilize the aforementioned methods and processes. The product selected can go through a wash, sort, and/or peel step. Products can be sorted for a specific size or other attribute to give a unique appearance such as a specific size or type of cut.

### 2. Tempering

From select operation 104, operational flow 100 can continue to tempering operation 106 where the product is tempered. Tempering allows for uniform cuts on the product when the product is processed. Tempering also provides for a smooth cut and mitigates jagged edges on the product. As one non-limiting example associated with a potato product, a potato can be tempered at a temperature from about (100°F) (37,77°C) to about (155°F) 68,33°C for about 30 to 40 minutes. In one aspect, the potato is tempered at a temperature from about (130°F) 54,44°C to about (140°F) 60°C. The potato can be tempered at a temperature from about 37,77°C, 40,55°C, 43,33°C, 46,11°C, 48,88°C, 51,66°C, 54,44°C, 57,22°C, 60°C, 62,77 °C, 65,55°C, 68,33°C (100°F, 105°F, 110°F, 115°F, 120°F, 125°F, 130°F, 135°F, 140°F, 145°F, 150°F, 155°F), to about 37,77°C, 40,55°C, 43,33°C, 46,11°C, 48,88°C, 51,66°C, 54,44°C, 57,22°C, 60°C, 62,77°C, 65,55°C, 68,33°C (100°F, 105°F, 110°F, 115°F, 120°F, 125°F, 130°F, 135°F, 140°F, 145°F, 150°F, and 155°F). The potato can be tempered from about 30, 31, 32, 33, 34, 35, 36, 37, 38, 39, 40 minutes to about 30, 31, 32, 33, 34, 35, 36, 37, 38, 39, 40 minutes. As an example associated with a sweet potato, sweet potatoes may or may not be tempered.

### 3. Cutting

From tempering operation 106, operational flow 100 can continue to cut operation 108 to create potato fries. At cut operation 108, the products can be cut into desirable shapes and sizes. The cut can be manual, mechanical, or via a water knife. The product can be cut into a width from about 0.05 inches to about 0.50 inches. The product can have a width from about 0.05, 0.10, 0.15, 0.20, 0.25, 0.30, 0.35, 0.40, 0.45, 0.50 inches to about 0.05, 0.10, 0.15, 0.20, 0.25, 0.30, 0.35, 0.40, 0.45, 0.50 inches. The product can have a height from about 0.05 inches to about 0.50 inches. The product can have a height from about 0.05, 0.10, 0.15, 0.20, 0.25, 0.30, 0.35, 0.40, 0.45, 0.50 inches to about 0.05, 0.10, 0.15, 0.20, 0.25, 0.30, 0.35, 0.40, 0.45, 0.50 inches. The product can have a length less than 5 inches. The product can have a length from about 2 inches to about 5 inches. The product can have a length from about 2.0, 2.5, 3.0, 3.5, 4.0, 4.5, 5.0 inches to about 2.0, 2.5, 3.0, 3.5, 4.0, 4.5, 5.0 inches. In one aspect, the product is cut into strips. As used herein, the term "strip" is used in its broadest sense to include strips having a rectangular cross-section in a shoestring cut. The product could also be cut or shaped into round strips. The strips can have any length naturally inherent to the product from which it is cut. The product can be cut into other specialized cuts (such as so-called "criss" cuts, "crinkle" cuts, "helical" cuts, "waffle" cuts, "chip" cuts, "straight" cuts, or "lattice" cuts and the like). The product can be cut into any combination of cuts discussed herein and/or any combination of known cuts.

Although not depicted, from cut operation 108, operational flow 100 can continue to a defect removal operation. At the defect removal operation, the cut product goes through a defect removal process. This process eliminates products that contain defects or cuts the defects off of the product. This process improves the appearance of the finished product by minimizing the amount of defects seen on the final product. The product can also be sorted to remove defective pieces to deliver whole cut, aesthetically pleasing products.

### 4. Blanching

From cut operation 108, operational flow 100 can continue to blanch operation 110. During blanching, simple carbohydrates in the potato fries are removed from the potato fries and complex carbohydrates are concentrated in the potato fries. Blanching generally takes place via a blanching system. The blanching system can include a blanch bath, a heat oven, infrared heating, microwave heating, steam heating, spray heating and/or forced air heating. The blanching system can include a water volume and one or more of flavorings, additives and/or starches. In one example aspect, acrylamide mitigation does not occur during blanch operation 110. In another example aspect color management does not occur during blanch operation 110. The potato fries can be blanched at a temperature from about 65,55°C to 93,33°C (150°F to 200°F) for about 2 to 20 minutes. The potato fries can be blanched from about 65,55°C, 68,33°C, 71,11°C, 73,88°C, 76,66°C, 79,44°C, 82,22°C, 85°C, 87,77°C, 90,55°C, 93,33°C (150°F, 155°F, 160°F, 165°F, 170°F, 175°F, 180°F, 185°F, 190°F, 195°F, 200°F) to about 65,55°C, 68,33°C, 71,11°C, 73,88°C, 76,66°C, 79,44°C, 82, 22°C, 85°C, 87,77°C, 90,55°C, 93,33°C (150°F, 155°F, 160°F, 165°F, 170°F, 175°F, 180°F, 185°F, 190°F, 195°F, 200°F). The potato fries can be blanched from about 2, 3, 4, 5, 6, 7, 8, 9, 10, 11, 12, 13, 14, 15, 16, 17, 18, 19, 20 minutes to about 2, 3, 4, 5, 6, 7, 8, 9, 10, 11, 12, 13, 14, 15, 16, 17, 18, 19, 20 minutes.

### 5. Acrylamide Mitigation

From blanch operation 110, operational flow 100 optionally continues to acrylamide mitigation operation 112. In another aspect, acrylamide mitigation is facilitated solely by the batter composition as indicated below. As stated, acrylamide mitigation operation 112 is an optional operation depending on the level of acrylamide treatment desired. As indicated below in relation to the batter, the acrylamide mitigation can be sufficiently mitigated via the batter. However, it should be understood that acrylamide mitigation can occur via a combination of acrylamide mitigation operation 112 and the batter as more fully set forth below. In the situation where acrylamide mitigation operation 112 is not desired, operational flow 100 bypasses acrylamide mitigation operation 112 and flows from blanch operation 110 to moisture reduction operation 112.

During acrylamide mitigation operation 112, an acrylamide mitigation component can be applied to the potato fries. The acrylamide mitigation component can include a component that interferes with the Maillard reaction to mitigate formation of acrylamide when heat is applied to the potato fries. For example, the acrylamide mitigation component can include a food grade acid in a solution. The solution can have a pH from about 2 to about 5. In other aspects, the solution can have a pH from about 2 to about 3. The solution can have a pH from about 2.0, 2.2, 2.4, 2.6, 2.8, 3.0, 3.2, 3.4, 3.6, 3.8, 4.0, 4.2, 4.4, 4.6, 4.8, 5.0 to about 2.0, 2.2, 2.4, 2.6, 2.8, 3.0, 3.2, 3.4, 3.6, 3.8, 4.0, 4.2, 4.4, 4.6, 4.8, 5.0. In one aspect, the food grade acid is sodium acid sulfate. The sodium acid sulfate has a concentration in the solution from about 0.10% to about 1.0%. The sodium acid sulfate has a concentration in the solution from about 0.10%, 0.20%, 0.30%, 0.40%, 0.50%, 0.60%, 0.70%, 0.80%, 0.90%, 1.0% to about 0.10%, 0.20%, 0.30%, 0.40%, 0.50%, 0.60%, 0.70%, 0.80%, 0.90%, 1.0%.

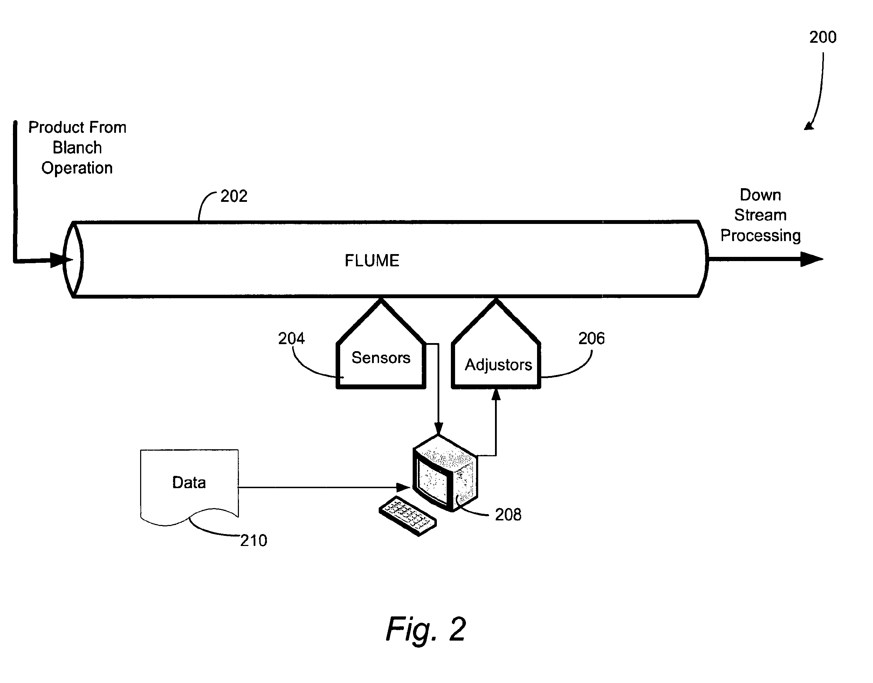

Acrylamide mitigation operation 112 can be facilitated by a myriad of actuators and devices. For example, the solution that includes the acrylamide mitigation component can be sprayed onto the potato fries via a spray nozzle. The solution can be associated with a bath. FIGURE 2 is an example system illustrating various elements for acrylamide mitigation in association with a flume. System 200 includes flume 202. Flume 202 can include a piping system. In one example, the piping system includes stainless steel pipes ranging from about 50 feet to about 150 feet in length depending on the configuration of the processing plant. Flume 202 can have a diameter from about 4 inches to about 24 inches depending on the quantity of potato fries being processed. As indicated, the potato fries from the blanch operation enter the flume and are transported to downstream operations. Such downstream operations can include a drying operation and/or a color management operation. As stated, flume 202 can have a solution that includes the acrylamide mitigation component. As the potato fries exit flume 202, the solution near the exit of flume 202 can be pumped back to the beginning of flume 202 to form a fluid loop.

Flume 202 can be in operative communication with sensors 204 and adjustors 206. Sensors 204 can include one or more sensors associated with flume 202 that monitor attributes of flume 202. For example, sensors 204 can include a pH sensor that measures the pH of the solution in flume 202. Sensors 204 can also include temperature sensors that measure the temperature of the solution in flume 202. Sensors 204 can also include flow rate sensors that measure the velocity of the solution and or residence time associated with the potato fries in flume 202. Sensors 204 can also include any other types of sensors that measure operational attributes associated with flume 202. Similar to sensors 202, adjustors 206 can include one or more adjustors associated with flume 202 that adjust attributes of flume 202. For example, adjustors 206 can include a pH adjustor. The pH adjustor can include a volume of food grade acid and/or water for injection into flume 202. As another example, adjustors 206 can include a temperature adjustor that heats and/or cools the solution within flume 202. Adjustors 206 can also include flow rate adjustors for increasing and/or decreasing the flow of solution and potato fries through flume 202. Adjustors 206 can also include any other types of adjustors capable of adjusting attributes associated with flume 202.

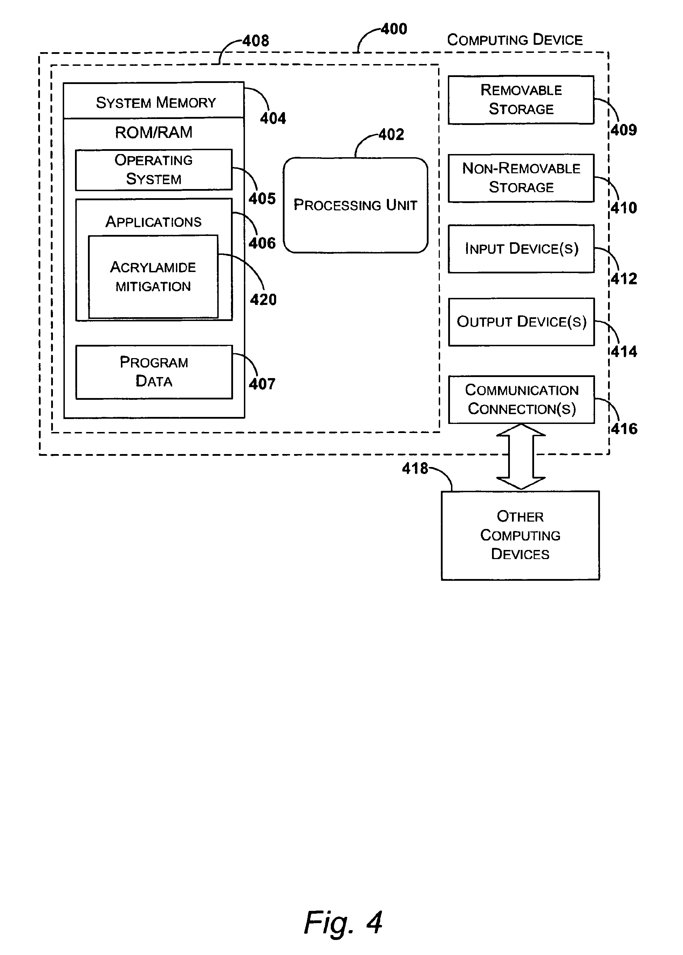

Sensors 204 and adjustors 206 can be in communication with computing device 208. The communication can be a wired communication, wireless communication, network communication, internet communication, and/or any other communication mode that allows sensors 204 and adjustors 206 to communicate with computing device 208. Computing device 208 can be a stand-alone computing device. Computing device 208 can also be an integrated component with one or more of sensors 204 and/or adjustors 206. In one aspect, computing device 208 includes a computing device as indicated in FIGURE 4. In a basic configuration, computing device 400 typically includes at least one processing unit 402 and system memory 404. Depending on the exact configuration and type of computing device, system memory 404 can be volatile (such as RAM), non-volatile (such as ROM, flash memory, and the like) or some combination of the two. System memory 404 typically includes operating system 405, one or more applications 406, and can include program data 407. In one aspect, applications 406 further include application 420 for acrylamide mitigation processes. In another aspect, operating system 405 includes instructions for acrylamide mitigation processes. This basic configuration is illustrated in FIGURE 4 by those components within dashed line 408.

Computing device 400 can also have additional features or functionality. For example, computing device 400 can also include additional data storage devices (removable and/or non-removable) such as, for example, magnetic disks, optical disks, or tape. Such additional storage is illustrated in FIGURE 4 by computer readable storage medium 409 and non-removable storage 410. Computer readable storage medium can include volatile and non-volatile, removable and non-removable media implemented by, for example, stored computer readable instructions, stored data structures, stored program modules or other stored data. System memory 404, computer readable storage medium 409 and non-removable storage 410 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 400. Any such computer storage media can be part of device 400. Computing device 400 can also have input device(s) 412 such as a sensors, adjustors, keyboard, mouse, pen, voice input device, touch input device, etc. Output device(s) 414 such as sensors, adjustors, a display, speakers, printer, etc., can also be included.

Computing device 400 also contains communication connection(s) 416 that allow the device to communicate with other computing devices 418, such as over a network or a wireless network. Communication connection(s) 416 is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

Returning to FIGURE 2, system 200 can also include data 210. Data 210 can be obtained by computing device 208 and can include operational and facility data. For example, such data can include the capacity of the flume, the dimensions of the flume, a desired flow rate within the flume, a desired temperature of any solution within flume 202. In another aspect, data 210 can include a target pH and/or a pH threshold. For example, the target pH can be a pH level as indicated above. An example threshold could be plus or minus 1 from the target pH. Again, the above target pH and pH thresholds are but examples.

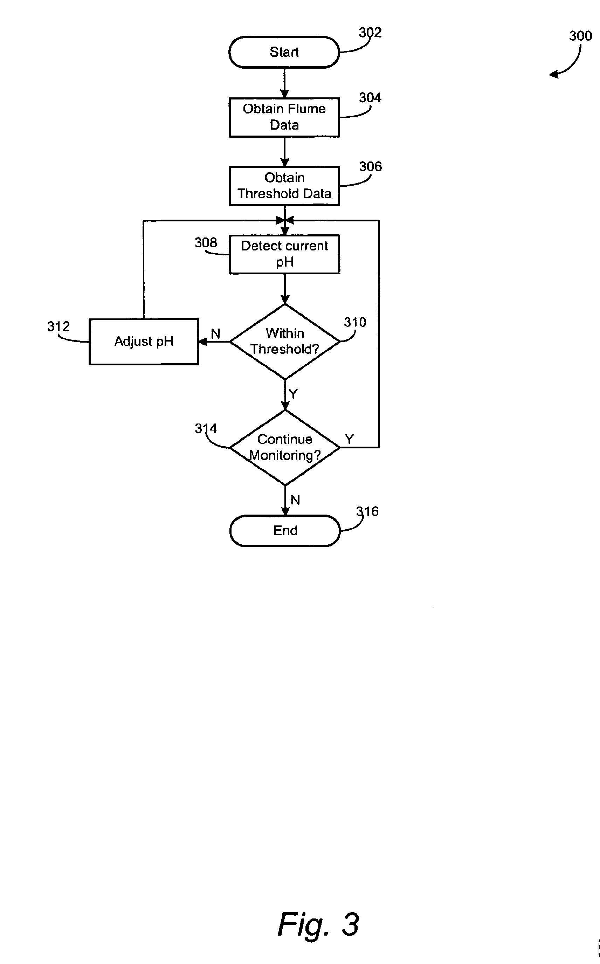

FIGURE 3 is an example operational flow diagram illustrating operations associated with the flume illustrated in FIGURE 2. Operational flow 300 begins at start operation 302 and continues to operation 304 where data regarding the flume is obtained. For example, the data regarding the flume can include the size of the flume, desired flow rates related to the flume, potato fry residence time within the flume and the like. In one aspect, the obtained data are that the flume is stainless steel pipe ranging from about 50 feet to about 150 feet in length. The flume has a diameter of about 4 inches to about 24 inches. The flume data can also include a desired flow rate of the solution within the flume. As an example, the data can include a desired flow rate from about 2 feet per second to about 12 feet per second. In other aspects, the flume data can include a desired temperature of the solution in the flume. Such a desired temperature can be from about 100°F to about 170°F. In other aspects, the data can include a desired residence time for the potato fries in the solution. In one aspect, the residence time in the flume can be from about 20 seconds to about 90 seconds. In another aspect, the residence time in the flume can be from about 30 seconds to about 40 seconds. As an example, the residence time can be from about 20, 25, 30, 35 40, 45, 50, 55, 60, 65, 70, 75, 80, 85, 90 seconds, to about 20, 25, 30, 35 40, 45, 50, 55, 60, 65, 70, 75, 80, 85, 90 seconds.

Operational flow 300 can continue from operation 304 to operation 306 where threshold data is obtained. Threshold data can include a value that indicates an acceptable deviation from a desired value. For example, a desired pH can be 2.0. The threshold can be, for example, set for 1.0. Accordingly, as long as the pH is within 1.0 of 2.0 then the pH is within the threshold. This example, related to threshold setting, is also true for other monitored data such as the temperature and flow rate.

Operational flow 300 continues to operation 308. At operation 308, a current pH is detected. Even though operational flow 300 is associated with a pH example, operational flow can pertain to the other monitored parameters of the flume such as temperature and flow rate. At operation 308, a pH sensor can detect the current pH of the flume. Operational flow 300 continues to decision operation 310 where it is determined whether the current pH is within the threshold of the desired pH. If not, operational flow 300 continues to operation 312 where the pH of the flume is adjusted. As indicated above, an adjustor can be actuated to inject solution into the flume. In one aspect, the solution is a food grade acid, such as sodium acid sulfate. From operation 312, operational flow 300 can loop back to operation 308.

In returning to decision operation 310, the current pH can be within the threshold. In such a situation, operational flow 300 continues to decision operation 314. At decision operation 314, it is decided whether to continue monitoring the flume. If yes, operational flow 300 loops back to operation 308 where the current pH is detected. If no, operational flow 300 continues to end operation 316 where the system can be taken off line or a pause in the monitoring can be implemented.

### 6. Moisture reduction

From acrylamide mitigation operation 112, operational flow 100 can optionally continue to moisture reduction operation 114. At moisture reduction operation 114, the product can undergo moisture reduction via shaking, forced air, oven heat, infrared, microwave, mechanical moisture reduction, chemical moisture reduction, drip drying, atmospheric drying, or other methods. Moisture reduction operation 114 facilitates a tacky surface on the potato fries, which helps a surface application stick to the surface of the potato fries. The product can undergo moisture reduction at a temperature from about 65°F to about 250°F for about 1 to about 20 minutes.

### 7. Surface Application

From moisture reduction operation 114, operational flow 100 continues to operation 116. At operation 116, a surface application can be applied to the potato fries. As indicted above, the surface application can be the primary substrate for carrying an acrylamide mitigating component. In another aspect, the surface application can be the only substrate for carrying an acrylamide mitigating component. The surface application can be a consumer perceivable surface application such as a batter and the batter can be a consumer unperceivable surface application such as a coating. During surface application operation 116, the product can go through a combination of battering and predusting/breading. Predusting/breading can include different coarsenesses of flour, a combination of dry ingredients that could include flour, baked cracked meal, starch, flavors, colors, spices, or other dry ingredients. The product could be battered, predusted then battered, battered-predusted-battered, battered-predusted-battered-predusted/breaded, etc. When multiple batters are used, they can be the same batter or different batter.

Various kinds of starch (functional starches and/or flours) can be utilized in the batter, such as corn starch, potato starch, tapioca starch, arrowroot starch, rice starch, oat starch, barley starch, wheat starch, and combinations thereof. The batter composition can include starches, fiber, gums, flours, proteins, flavors, spices, colors, seasonings, and ingredients thereof.

At least one example of a dry mix for a surface application for the potato fries can include starch at about 70% to about 80% total weight of the dry batter. The dry batter can include flour at about 15% to about 45% total weight of the dry batter. The dry batter can include salt at about 2.0% to about 3.0% total weight of the dry batter. The batter can include sodium acid pyrophosphate at about 0.5% to about 1.5% total weight of the dry batter. The batter can include baking soda at about 0.5% to about 1.5% total weight of the dry batter. The batter also can include gum powder at about 0.01% to about 0.2% total weight of the dry batter.

In some aspects, acrylamide mitigation can be achieved by adding an acrylamide mitigating component to the batter. The acrylamide mitigating component in the batter can be in addition to the acrylamide mitigation operation 112. The acrylamide mitigation component in the batter can also be in lieu of the acrylamide mitigation operation 112. For example, a divalent metal salt, such as calcium chloride, can be incorporated into the batter in an amount sufficient to interfere with the Maillard reaction and mitigate the formation of acrylamide during reconstitution. Other examples of acrylamide mitigation components can include calcium carbonate, calcium lactate, calcium citrate and the like. The batter dry mix can include about 0.1% to about 8.0% calcium chloride in the batter dry mix. For example the batter dry mix can include calcium chloride from about 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85% 0.90%, 0.95%, 1.00%, 1.10%, 1.20%, 1.30%, 1.40%, 1.50%, 1.60%, 1.70%, 1.80%, 1.90%, 2.00%, 2. 10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00% to about 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.10%, 1.20%, 1.30%, 1.40%, 1.50%, 1.60%, 1.70%, 1.80%, 1.90%, 2.00%, 2.10%, 2.20%, 2.30%, 2.40%, 2.50%, 2.60%, 2.70%, 2.80%, 2.90%, 3.00%, 3.10%, 3.20%, 3.30%, 3.40%, 3.50%, 3.60%, 3.70%, 3.80%, 3.90%, 4.00%, 4.10%, 4.20%, 4.30%, 4.40%, 4.50%, 4.60%, 4.70%, 4.80%, 4.90%, 5.00%, 5.10%, 5.20%, 5.30%, 5.40%, 5.50%, 5.60%, 5.70%, 5.80%, 5.90%, 6.00%, 6.10%, 6.20%, 6.30%, 6.40%, 6.50%, 6.60%, 6.70%, 6.80%, 6.90%, 7.00%, 7.10%, 7.20%, 7.30%, 7.40%, 7.50%, 7.60%, 7.70%, 7.80%, 7.90%, 8.00%.

The batter can further include a color augmenter. The color augmenter can be selected based on a target reflective value for the potato fry upon reconstitution. For example, the target reflective value can be less than about 70, 69, 68, 67, 66, 65, 64, 63, 62, 61, 60, 59, 58, 57, 56, 55. In other aspects, the target reflective value can be from about 58, 59, 60, 61, 62, 63, 64, 65, 66, 67, 68 to about 58, 59, 60, 61, 62, 63, 64, 65, 66, 67, 68. In still other aspects the average target reflective value for a batch (e.g. 1.5 pounds) of potato fries can be from about 62, 63, 64 to about 62, 63, 64.

The color augmenter can include a colorant and/or a browning agent. The color augmenter can be applied to the potato fries after battering via dipping, spraying, etc. The color augmenter can also be applied to the potato fries via the batter. Stated another way, the batter can include the color augmenter. Colorants can include any type of food colorant. For example, the colorant can include caramel, annatto, Turmeric and combinations thereof. In one aspect, the colorant is in a powder form. In one aspect, the colorant is a powder that includes about 0.01% to about 0.1% annatto and about 0.01% to about 0.1% caramel. The powder can include about 0.01%, 0.02%, 0.03%, 0.04%, 0.05%, 0.06%, 0.07%, 0.08%, 0.09%, 0.10% to about 0.01%, 0.02%, 0.03%, 0.04%, 0.05%, 0.06%, 0.07%, 0.08%, 0.09%, 0.10% annatto. The powder can include about 0.01%, 0.02%, 0.03%, 0.04%, 0.05%, 0.06%, 0.07%, 0.08%, 0.09%, 0.10% to about 0.01%, 0.02%, 0.03%, 0.04%, 0.05%, 0.06%, 0.07%, 0.08%, 0.09%, 0.10% caramel. In another aspect, the dry batter mix can include the colorant at about 0.05% to about 0.5% total weight of the dry batter mix. The colorant can be about 0.05%, 0.10%, 0.15%, 0.20%, 0.25%, 0.30%, 0.35%, 0.40%, 0.45%, 0.50% total weight of the dry batter mix to about 0.05%, 0.10%, 0.15%, 0.20%, 0.25%, 0.30%, 0.35%, 0.40%, 0.45%, 0.50% total weight of the dry batter mix. The colorant can also include spices, paprika, red pepper, black pepper, and combinations thereof.

The browning agent can include an agent that causes browning during a reconstitution process. An example of a browning agent can include a sugar. Even though the sugar can cause an increase in acrylamide level upon reconstitution, sugar can be used to manage color development and provide highlighting on the potato fry during reconstitution. In that the sugar can cause an increase in acrylamide levels, the sugar can be utilized conservatively and strategically to give the potato fry highlighting to an acceptable level without completely negating the effect of the acrylamide management operation. An example sugar used as a browning agent can include dextrose. In one aspect, the browning agent is in a powder form in the batter from about 0.01% to about 2.0% total weight of the dry batter. The browning agent can be in a powder at a concentration level from about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0% total weight of the dry batter mix to about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0% total weight of the dry batter mix. The browning agent can be applied at several locations in operational flow 100. For example, the browning agent can be associated with the batter. The browning agent can be applied after the potato fries are battered. The browning agent can also be applied after the potato fries are par-fried as indicated below.

After surface application operation 114, the potato fries have a managed color. The potato fries are capable of yielding reconstituted potato fries having a color and acrylamide level, upon being reconstituted, as indicated below. In one aspect, the potato fries are capable of yielding an acrylamide level of less than about, 200, 195, 190, 185, 180, 175, 170, 165, 160, 155, 150, 145, 140, 135, 130, 125, 120, 115, 110, 105, 100, 95, 90, 85, 80, 75, 70, 65, 60, 55, 50, 45, 40, 35, 30, 25, 20, 15, 10, and 5 ppb. In another aspect, the potato fries are capable of yielding a reduction in acrylamide levels in comparison to untreated fries upon reconstitution. The reduction in acrylamide levels can be greater than about 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% and 99%. The potato fries are capable of yielding a reflective value of less than about 70, 69, 68, 67, 66, 65, 64, 63, 62, 61, 60, 59, 58, 57, 56, 55. In other aspects, the reflective value can be from about 58, 59, 60, 61, 62, 63, 64, 65, 66, 67, 68 to about 58, 59, 60, 61, 62, 63, 64, 65, 66, 67, 68. In still other aspects the average reflective value for a batch (e.g. about 1.5 pounds) of potato fries can be from about 62, 63, 64 to about 62, 63, 64.

### 8. Par-Fry

From surface application operation 116, operational flow 100 can continue to par-fry operation 118. At par-fry operation 118, the product can be fried in hot oil. The potato fries can be fried in any hot oil suitable for frying, such as high oleic oil, low linolenic oil, saturated, unsaturated, polyunsaturated, and/or monounsaturated fats/oils. As a non-limiting example, the potato fries can be fried from about 176,66°C-204,44°C (350°F to 400°F). The potato fries can be fried from about 176,66°C, 179,44°C, 182,22°C, 185°C, 187,77°C, 190,55°C, 193,33°C, 196,11°C, 198,88°C, 201,66°C, 204°C (350°F, 355°F, 360°F, 365°F, 370°F, 375°F, 380°F, 385°F, 390°F, 395°F, 400°F) to about 176,66°C, 179,44°C, 182,22°C, 185°C, 187,77°C, 190,55°C, 193,33°C, 196,11°C, 198,88°C, 201,66°C, 204°C (350°F, 355°F, 360°F, 365°F, 370°F, 375°F, 380°F, 385°F, 390°F, 395°F, 400°F). The potato fries can be fried from about 10, 20, 30, 40, 50, 60, 70, 80, 90 seconds to about 10, 20, 30, 40, 50, 60, 70, 80, 90 seconds.

### 9. Freeze

From par-fry operation 118, operational flow 100 can optionally continue to freeze operation 120. The potato fries can undergo freeze operation 120 when shipping to another location. In one aspect, the potato fries can be initially cooled to remove the latent heat. The potato fries can be cooled for about 5 minutes. Cooling can speed up the freeze operation 120 and further reduce the moisture content of the potato fries. The potato fries can be quickly frozen until the potato fries reach a temperature of no more than 0°C (32°F). In another aspect, the potato fries are frozen until they reach a temperature less than -7,78°C (18°F). In other aspects, the potato fries temperature can be about -15°C (5°F) to about -3,89°C (25°F) The potato fries can be quick frozen at a temperature from about -40°C to 17,78°C ( -40 °F to 0°F). In one aspect, the potato fries are frozen from about 1 minute to about 15 minutes.

### 10. Packaging & Shipping

Operational flow 100 continues to package operation 122 where the potato fries are packaged and shipped. In one aspect, the potato fries are packaged in bundles. For example, the package can include potato fries having a weight from about 0.5, 1.0, 1.5, 2.0, 2.5, 3.0, 3.5, 4.0, 4.5, 5.0, 6.0, 7.0, 8.0, 9.0, 10.0, 15.0, 20.0, 25.0, 30.0, 40.0, 50 pounds to about 0.5, 1.0, 1.5, 2.0, 2.5, 3.0, 3.5, 4.0, 4.5, 5.0, 6.0, 7.0, 8.0, 9.0, 10.0, 15.0, 20.0, 25.0, 30.0, 40.0, 50 pounds.

### 11. Reconstitution

From package operation 122, operational flow 100 can continue to reconstitution operation 124. Reconstitution operation 124 can include refrying the potato fries for consumption. The potato fries can be fried in hot oil. The potato fries can be fried in any hot oil suitable for frying, such as high oleic oil, low linolenic oil, saturated, unsaturated, polyunsaturated, and/or monounsaturated fats/oils. In other aspects, reconstitution can include baking. As a non-limiting example the potato fries can be fried from about 148,88°C to 204,44°C (300°F to 400°F). The potato fries can be fried from about 148,88°C, 151,66°C, 154,44°C, 157,22°C, 160°C, 162,77°C, 165,55°C, 168,33°C, 171,11°C, 173,88°C, 176,66°C, 179,44°C, 182,22°C, 185°C, 187,77°C, 190,55°C, 193,33°C, 196,11°C, 198,8°C, 201,66°C, 204°C (300°F, 305°F, 310°F, 315°F, 320°F, 325°F, 330°F, 335°F, 340°F, 345°F, 350°F, 355°F, 360°F, 365°F, 370°F, 375°F, 380°F, 385°F, 390°F, 395°F, 400°F) to about 148,88°C, 151,66°C, 154,44°C, 157,22°C, 160°C, 162,77°C, 165,55°C, 168,33°C, 171,11°C, 173,88°C, 176,66°C, 179,44°C, 182,22°C, 185°C, 187,77°C, 190,55°C, 193,33°C, 196,11°C, 198,8°C, 201,66°C, 204°C (300°F, 305°F, 310°F, 315°F, 320°F, 325°F, 330°F, 335°F, 340°F, 345°F, 350°F, 355°F, 360°F, 365°F, 370°F, 375°F, 380°F, 385°F, 390°F, 395°F, 400°F). The potato fries can be fried from about 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0 minutes to about 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0 minutes.

After reconstitution operation 124, the potato fries have a color and acrylamide level. In one aspect, the potato fries have an acrylamide level of less than about, 200, 195, 190, 185, 180, 175, 170, 165, 160, 155, 150, 145, 140, 135, 130, 125, 120, 115, 110, 105, 100, 95, 90, 85, 80, 75, 70, 65, 60, 55, 50, 45, 40, 35, 30, 25, 20, 15, 10, and 5 ppb. In another aspect, the potato fries have a reduction of acrylamide levels in comparison to untreated fries upon reconstitution. The reduction in acrylamide levels can be greater than about 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% and 99%. The potato fries can have a reflective value of less than about 70, 69, 68, 67, 66, 65, 64, 63, 62, 61, 60, 59, 58, 57, 56, 55. In other aspects, the reflective value can be from about 58, 59, 60, 61, 62, 63, 64, 65, 66, 67, 68 to about 58, 59, 60, 61, 62, 63, 64, 65, 66, 67, 68. In still other aspects the average reflective value for a batch (e.g. about 1.5 pounds) of potato fries can be from about 62, 63, 64 to about 62, 63,64.

### B. POTATO FRY PRODUCT

As more fully set forth below, the potato fry product is described at two points in the process. The potato fry product is described at a raw state after surface application operation 116 and before par-fry operation 118. The potato fry product is also described at a reconstituted state after reconstitution operation 124.

### 1. Raw State

The raw state of the potato fries can include a size and shape. The raw potato fries can have a width from about 0.05 inches to about 0.50 inches. The raw potato fries can have a width from about 0.05, 0.10, 0.15, 0.20, 0.25, 0.30, 0.35, 0.40, 0.45, 0.50 inches to about 0.05, 0.10, 0.15, 0.20, 0.25, 0.30, 0.35, 0.40, 0.45, 0.50 inches. The raw potato fries can have a height from about 0.05 inches to about 0.50 inches. The raw potato fries can have a height from about 0.05, 0.10, 0.15, 0.20, 0.25, 0.30, 0.35, 0.40, 0.45, 0.50 inches to about 0.05, 0.10, 0.15, 0.20, 0.25, 0.30, 0.35, 0.40, 0.45, 0.50 inches. The raw potato fries can have a length less than 5 inches. The raw potato fries can have a length from about 2 inches to about 5 inches. The raw potato fries can have a length from about 2.0, 2.5, 3.0, 3.5, 4.0, 4.5, 5.0 inches to about 2.0, 2.5, 3.0, 3.5, 4.0, 4.5, 5.0 inches.

In one aspect, the shape of the raw potato fries can be described as a strip. As used herein, the term "strip" is used in its broadest sense to include strips having a rectangular cross-section in a shoestring cut. The raw potato fries can also be described as having a round strip shape. The strips can have any length naturally inherent to the potato fries from which it is cut. The raw potato fries can further be described as having a specialized shape (such as so-called "criss" cuts, "crinkle" cuts, "helical" cuts, "waffle" cuts, "chip" cuts, "straight" cuts, or "lattice" cuts and the like). The raw potato fries can have a shape that includes any combination of discussed above.

The raw potato fry can have a surface application. The raw potato fry can have a calcium content from about 0.05% to about 1.0% the total weight of the raw potato fry. The calcium content can be from the surface application. The calcium content can be from about 0.05%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0% to about 0.05%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0%.

The raw potato fry can have a moisture content. The moisture content can be from about 70% to about 80% of the total weight of the raw potato fry. The moisture content can be from about 70%, 71%, 72%, 73%, 74%, 75%, 76%, 77%, 78%, 79%, 80% total weight of the potato fry to about 70%, 71%, 72%, 73%, 74%, 75%, 76%, 77%, 78%, 79%, 80% total weight of the potato fry.

The raw potato fry can have a color augmenter in a surface application of the raw potato fry. The color augmenter can include a colorant and/or a browning agent. Colorants can include any type of food colorant. For example, the colorant can include caramel, annatto, Turmeric and combinations thereof. An example of a browning agent can include a sugar. An example sugar used as a browning agent can include dextrose.

The raw potato fries can be capable of yielding reconstituted potato fries having a color and acrylamide level, upon being reconstituted, as indicated below. In one aspect, the raw potato fries are capable of yielding an acrylamide level of less than about, 200, 195, 190, 185, 180, 175, 170, 165, 160, 155, 150, 145, 140, 135, 130, 125, 120, 115, 110, 105, 100, 95, 90, 85, 80, 75, 70, 65, 60, 55, 50, 45, 40, 35, 30, 25, 20, 15, 10, and 5 ppb. In another aspect, the potato fries are capable of yielding a reduction in acrylamide levels in comparison to untreated fries upon reconstitution. The reduction in acrylamide levels can be greater than about 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50% 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 8%, 82%, 83%, 84%, 85%, 86%, 87%, 88%, 89%, 90%, 91%, 92%, 93%, 94%, 95%, 96%, 97%, 98% and 99%. The potato fries are capable of yielding a reflective value of less than about 70, 69, 68, 67, 66, 65, 64, 63, 62, 61, 60, 59, 58, 57, 56, 55. In other aspects, the reflective value can be from about 58, 59, 60, 61, 62, 63, 64, 65, 66, 67, 68 to about 58, 59, 60, 61, 62, 63, 64, 65, 66, 67, 68. In still other aspects, the raw potato fries are capable of yielding an average reflective value for a batch (e.g. about 1.5 pounds) of potato fries from about 62, 63, 64 to about 62, 63, 64.

### 2. Reconstituted State

The reconstituted state of the potato fries can include a size and shape. The reconstituted potato fries can have a width from about 0.05 inches to about 0.50 inches. The reconstituted potato fries can have a width from about 0.05, 0.10, 0.15, 0.20, 0.25, 0.30, 0.35, 0.40, 0.45, 0.50 inches to about 0.05, 0.10, 0.15, 0.20, 0.25, 0.30, 0.35, 0.40, 0.45, 0.50 inches. The reconstituted potato fries can have a height from about 0.05 inches to about 0.50 inches. The reconstituted potato fries can have a height from about 0.05, 0.10, 0.15, 0.20, 0.25, 0.30, 0.35, 0.40, 0.45, 0.50 inches to about 0.05, 0.10, 0.15, 0.20, 0.25, 0.30, 0.35, 0.40, 0.45, 0.50 inches. The reconstituted potato fries can have a length less than 5 inches. The reconstituted potato fries can have a length from about 2 inches to about 5 inches. The reconstituted potato fries can have a length from about 2.0, 2.5, 3.0, 3.5, 4.0, 4.5, 5.0 inches to about 2.0, 2.5, 3.0, 3.5, 4.0, 4.5, 5.0 inches.

In one aspect, the shape of the reconstituted potato fries can be described as a strip. As used herein, the term "strip" is used in its broadest sense to include strips having a rectangular cross-section in a shoestring cut. The reconstituted potato fries can also be described as having a round strip shape. The strips can have any length naturally inherent to the potato fries from which it is cut. The reconstituted potato fries can further be described as having a specialized shape (such as so-called "criss" cuts, "crinkle" cuts, "helical" cuts, "waffle" cuts, "chip" cuts, "straight" cuts, or "lattice" cuts and the like). The reconstituted potato fries can have a shape that includes any combination of discussed above.

The reconstituted potato fry can have a surface application. The reconstituted potato fry can have a calcium content from about 0.05% to about 1.0% the total weight of the reconstituted potato fry. The calcium content can be from the surface application. The calcium content can be from about 0.05%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0% to about 0.05%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0%.

The reconstituted potato fry can have a moisture content. The moisture content can be from about 35% to about 45% of the total weight of the reconstituted potato fry. The moisture content can be from about 35%, 36%, 37%, 38%, 39%, 40%, 41%, 42%, 43%, 44%, 45% total weight of the reconstituted potato fry to about 35%, 36%, 37%, 38%, 39%, 40%, 41%, 42%, 43%, 44%, 45% total weight of the reconstituted potato fry.

The reconstituted potato fries can have a color and acrylamide level. In one aspect, the reconstituted potato fries have an acrylamide level of less than about, 200, 195, 190, 185, 180, 175, 170, 165, 160, 155, 150, 145, 140, 135, 130, 125, 120, 115, 110, 105, 100, 95, 90, 85, 80, 75, 70, 65, 60, 55, 50, 45, 40, 35, 30, 25, 20, 15, 10, and 5 ppb. In another aspect, the potato fries have a reduction of acrylamide levels in comparison to untreated fries upon reconstitution. The reduction in acrylamide levels can be greater than about 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98% and 99%. The reconstituted potato fries have a reflective value of less than about 70, 69, 68, 67, 66, 65, 64, 63, 62, 61, 60, 59, 58, 57, 56, 55. In other aspects, the reflective value can be from about 58, 59, 60, 61, 62, 63, 64, 65, 66, 67, 68 to about 58, 59, 60, 61, 62, 63, 64, 65, 66, 67, 68. In still other aspects, the reconstituted potato fries are have an average reflective value for a batch (e.g. about 1.5 pounds) of potato fries from about 62, 63, 64 to about 62, 63, 64.

### C. EXAMPLES

As more fully set forth below, an example objective of the collective examples is to demonstrate the impact of a color augmenter on the development of color and acrylamide in potato fries.

In each of the examples below, the acrylamide level of the sample follows the FDA 2003 draft method. In this method, the sample is spiked with ¹³C₃-acrylamide, extracted in water with shaking, centrifugation, and filtrated under ambient conditions, followed by clean-up of extract using two solid phase extraction (SPE) cartridges (Oasis HLB and BondElut Accucat). Reversed phase liquid chromatography (RP-LC) is performed using mobile phase 0.1% acetic acid/0.5% methanol. Detection of acrylamide is performed using tandem mass spectrometry (MS/MS) to monitor the transition at m/z 72 → 55 for acrylamide and m/z 75 → 58 for ¹³C₃-acrylamide. Analytical instrumentation used includes an Agilent 1200 HPLC equipped with vacuum degasser, binary pump, autosampler, and temperature-controlled column compartment coupled to Applied Biosystems 4000 QTrap hybrid triple-quadrupole/linear ion trap mass spectrometer with electrospray source. Chromatographic separation is performed using Phenomenex Synergi 4u Hydro-RP 80A (250mm x 2mm) reversed phase analytical column. The reflective values were measured by a Spectrophotomer manufactured by Agtron, Inc, located in Reno, Nevada.

### Example 1 - No Calcium Chloride, No Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0.296 inches. The cut potatoes were then blanched 10 minutes in a bath of hot water having a temperature of 73,88°C (165°F). The cut potatoes were then dried with 140°F air to achieve a 12% moisture loss. The cut potatoes were then battered. The dry batter included starch at 75.60% total weight of the dry batter. The dry batter included flour at 20.0% total weight of the dry batter. The dry batter included salt at 2.50% total weight of the dry batter. The batter included sodium acid pyrophosphate at 1.10% total weight of the dry batter. The batter included baking soda at 0.75% total weight of the dry batter. The batter also included gum powder at 0.05% total weight of the dry batter.

The battered potatoes were then par-fried in oil for 50 seconds at a temperature of 187,77°C-190,55°C (370-375°F). The par-fried potatoes were then frozen and divided into 1.5 pound bags. The frozen potatoes were then reconstituted in a fryer at atmospheric pressure. The oil of the fryer had an initial oil temperature of 176,66°C (350°F) and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 0.00% | 75.57 | 0.006 |
| 2 | 0.00% | 77.46 | 0.005 |
| 3 | 0.00% | 76.81 | 0.005 |
| Ave | x | 76.61 | 0.005 |
| St. Dev | x | 0.96 | 0.001 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 56.61 | 0.006 | 56 | x |
| 2 | 57.91 | 0.007 | 19 | x |
| 3 | 58.86 | 0.006 | 32 | x |
| Ave | 57.79 | 0.006 | 36 | 32.07% |
| St. Dev | 1.13 | 0.001 | 19 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | 36.17 | 0.009 | 242 | x | 62.6 |
| 2 | 38.96 | 0.014 | 173 | x | 63.2 |
| 3 | 40.22 | 0.018 | 68 | x | 68.7 |
| Ave | 38.45 | 0.014 | 161 | 51.21% | 64.8 |
| St. Dev | 2.07 | 0.005 | 88 | x | 3.4 |

### Example 2 - No Calcium Chloride, Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,88 °C (165°F). The cut potatoes were then dried with 60°C (140°F) air to achieve a 12% moisture loss. The cut potatoes were then battered The dry batter included starch at 75.43% total weight of the dry batter. The dry batter included flour at 20.0% total weight of the dry batter. The dry batter included salt at 2.50% total weight of the dry batter. The batter included sodium acid pyrophosphate at 1.10% total weight of the dry batter. The batter included baking soda at 0.75% total weight of the dry batter. The batter included Dextrose at 0.18% total weight of the dry batter. The batter also included gum powder at 0.05% total weight of the dry batter.

The battered potatoes were then par-fried in oil for 50 seconds at a temperature of 187,77°C-190,55°C (370-375°F). The par-fried potatoes were then frozen and divided into 1.5 pound bags. The frozen potatoes were then reconstituted in a fryer at atmospheric pressure. The oil of the fryer had an initial oil temperature of 176,66°C (350°F) and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 0.00% | 75.57 | 0.007 |
| 2 | 0.00% | 77.42 | 0.005 |
| 3 | 0.00% | 77.26 | 0.005 |
| Ave | x | 76.75 | 0.006 |
| St. Dev | x | 1.03 | 0.001 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 57.56 | 0.006 | 56 | x |
| 2 | 57.57 | 0.006 | 43 | x |
| 3 | 57.00 | 0.006 | 59 | x |
| Ave | 57.38 | 0.006 | 53 | x |
| St. Dev | 0.33 | 0.000 | 9 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | x | x | x | x | x |
| 2 | 37.57 | 0.008 | 373 | x | 58.5 |
| 3 | 37.90 | 0.007 | 286 | x | 61.8 |
| Ave | 37.74 | 0.008 | 330 | x | 60.2 |
| St. Dev | 0.23 | 0.001 | 62 | x | 2.3 |

### Example 3 - No Calcium Chloride, No Dextrose, Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,88°C (165°F). The cut potatoes were then dried with 60°C (140°F) air to achieve a 12% moisture loss. The cut potatoes were then battered. The dry batter included starch at 75.49% total weight of the dry batter. The dry batter included flour at 20.0% total weight of the dry batter. The dry batter included salt at 2.50% total weight of the dry batter. The batter included sodium acid pyrophosphate at 1.10% total weight of the dry batter. The batter included baking soda at 0.75% total weight of the dry batter. The dry batter included colorant (caramel and Annatto blend) at 0.01% total weight of the dry batter. The batter also included gum powder at 0.05% total weight of the dry batter.

The battered potatoes were then par-fried in oil for 50 seconds at a temperature of 187,77°C-190,55°C (370-375°F). The par-fried potatoes were then frozen and divided into 1.5 pound bags. The frozen potatoes were then reconstituted in a fryer at atmospheric pressure. The oil of the fryer had an initial oil temperature of 176,66°C (350°F) and the potatoes were cooked for 2 minutes and 30 seconds. The cooked potatoes were then cooled. Three random samples were taken during various steps in the process to test characteristics of the samples.

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | x | x | x | x |
| 2 | 59.33 | 0.012 | 52 | x |
| 3 | 60.41 | 0.006 | 51 | x |
| Ave | 59.87 | 0.009 | 52 | 1.8% |
| St. Dev | 0.76 | 0.004 | 1 | x |

After reconstitution, the potato fries exhibited the following attributes:

| | ***After Refry*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | x | x | x | x | x |
| 2 | 38.54 | 0.010 | 286 | x | 56.0 |
| 3 | 40.23 | 0.011 | 325 | x | 56.8 |
| Ave | 39.39 | 0.011 | 306 | 7.2% | 56.4 |
| St.Dev | 1.20 | 0.001 | 28 | x | 0.6 |

### Example 4 - 1.5% Calcium Chloride (Dry Batter), No Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,88°C (165°F). The cut potatoes were then dried with 60°C (140°F) air to achieve a 12% moisture loss. The cut potatoes were then battered. The dry batter included starch at 74.49% total weight of the dry batter. The dry batter included flour at 19.70% total weight of the dry batter. The dry batter included salt at 2.46% total weight of the dry batter. The batter included sodium acid pyrophosphate at 1.08% total weight of the dry batter. The batter included baking soda at 0.74% total weight of the dry batter. The batter included gum powder at 0.05% total weight of the dry batter. The batter also included calcium chloride at 1.48% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of (350°F) 176,67°C and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 1.48% | 77.12 | 0.007 |
| 2 | 1.48% | 76.65 | 0.006 |
| 3 | 1.48% | 77.03 | 0.008 |
| Ave | x | 76.93 | 0.007 |
| St. Dev | x | 0.25 | 0.001 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 57.43 | 0.066 | 0 | x |
| 2 | 57.71 | 0.059 | 0 | x |
| 3 | 58.52 | 0.052 | 0 | x |
| Ave | 57.89 | 0.059 | 0 | 100.00% |
| St. Dev | 0.57 | 0.007 | 0 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | 36.91 | 0.091 | 112 | x | 75.9 |
| 2 | 40.37 | 0.071 | 49 | x | 79.6 |
| 3 | 41.06 | 0.076 | 37 | x | 80.5 |
| Ave | 39.45 | 0.079 | 66 | 80.00% | 78.7 |
| St. Dev | 2.22 | 0.010 | 40 | x | 2.4 |

### Example 5 - 1.5% Calcium Chloride (Dry Batter), Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89°C (165°F). The cut potatoes were then dried with 60°C (140°F) air to achieve a 12% moisture loss. The cut potatoes were then battered. The dry batter included starch at 74.31% total weight of the dry batter. The dry batter included flour at 19.70% total weight of the dry batter. The dry batter included salt at 2.46% total weight of the dry batter. The batter included sodium acid pyrophosphate at 1.08% total weight of the dry batter. The batter included baking soda at 0.74% total weight of the dry batter. The batter included gum powder at 0.05% total weight of the dry batter. The batter included calcium chloride at 1.48% total weight of the dry batter. The batter also includes dextrose at 0.18% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67°C (350°F) and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 1.48% | 76.34 | 0.008 |
| 2 | 1.48% | 74.07 | 0.007 |
| 3 | 1.48% | 77.31 | 0.005 |
| Ave | x | 75.91 | 0.007 |
| St. Dev | x | 1.66 | 0.002 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 57.68 | 0.068 | 0 | x |
| 2 | 58.64 | 0.060 | 0 | x |
| 3 | 58.11 | 0.062 | 0 | x |
| Ave | 58.14 | 0.063 | 0 | 100.00% |
| St. Dev | 0.48 | 0.004 | 0 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | 40.26 | 0.087 | 133 | x | 72.8 |
| 2 | 39.87 | 0.087 | 64 | x | 78.8 |
| 3 | 41.10 | 0.084 | 67 | x | 77.2 |
| Ave | 40.41 | 0.086 | 88 | 73.33% | 76.3 |
| St. Dev | 0.63 | 0.002 | 39 | x | 3.1 |

### Example 6 - 1.5% Calcium Chloride (Dry Batter), No Dextrose, Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89°C (165°F). The cut potatoes were then dried with 60°C (140°F) air to achieve a 12% moisture loss. The cut potatoes were then battered. The dry batter included starch at 74.48% total weight of the dry batter. The dry batter included flour at 19.70% total weight of the dry batter. The dry batter included salt at 2.46% total weight of the dry batter. The batter included sodium acid pyrophosphate at 1.08% total weight of the dry batter. The batter included baking soda at 0.74% total weight of the dry batter. The batter included gum powder at 0.05% total weight of the dry batter. The batter included calcium chloride at 1.48% total weight of the dry batter. The batter also includes colorant (caramel Annatto blend) at 0.01% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67°C (350°F) and the potatoes were cooked for 2 minutes and 30 seconds. The cooked potatoes were then cooled. Three random samples were taken during various steps in the process to test characteristics of the samples.

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | x | x | x | x |
| 2 | 57.98 | 0.062 | 10 | x |
| 3 | 58.39 | 0.068 | 10 | x |
| Ave | 58.19 | 0.065 | 10 | 81.1% |
| St. Dev | 0.29 | 0.004 | 0 | x |

After reconstitution, the potato fries exhibited the following attributes:

| | ***After Refry*** | | | | |
|---|---|---|---|---|---|
| Sample | Moisture Content (g/100g) | Calcium (g/100g) | Acrylamide (AA) (ppb) | AA percent change from Control Average | Agtron Color |
| 1 | x | x | x | x | x |
| 2 | 39.16 | 0.091 | 124 | x | 61.6 |
| 3 | 38.20 | 0.090 | 127 | x | 64.4 |
| Ave | 38.68 | 0.091 | 126 | 61.8% | 63.0 |
| St. Dev | 0.68 | 0.001 | 2 | x | 2.0 |

### Example 7 - 3.0% Calcium Chloride (Dry Batter), No Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89°C (165°F). The cut potatoes were then dried with 60°C (140°F) air to achieve a 12% moisture loss. The cut potatoes were then battered. The dry batter included starch at 73.40% total weight of the dry batter. The dry batter included flour at 19.42% total weight of the dry batter. The dry batter included salt at 2.43% total weight of the dry batter. The batter included sodium acid pyrophosphate at 1.07% total weight of the dry batter. The batter included baking soda at 0.73% total weight of the dry batter. The batter included gum powder at 0.05% total weight of the dry batter. The batter also included calcium chloride at 2.90% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67 (350°F) and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 2.9% | 77.09 | 0.003 |
| 2 | 2.9% | 78.97 | 0.004 |
| 3 | 2.9% | 75.30 | 0.005 |
| Ave | x | 77.12 | 0.004 |
| St. Dev | x | 1.84 | 0.001 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 55.28 | 0.109 | 0 | x |
| 2 | 57.44 | 0.112 | 0 | x |
| 3 | 58.26 | 0.117 | 0 | x |
| Ave | 56.99 | 0.113 | 0 | 100.00% |
| St. Dev | 1.54 | 0.004 | 0 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | 37.53 | 0.157 | 75 | x | 70.2 |
| 2 | 42.26 | 0.144 | 25 | x | 72.5 |
| 3 | 39.95 | 0.155 | 32 | x | 73.4 |
| Ave | 39.91 | 0.152 | 44 | 86.67% | 72.0 |
| St. Dev | 2.37 | 0.007 | 27 | x | 1.7 |

### Example 8 - 3.0% Calcium Chloride (Dry Batter), Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89°C (165°F). The cut potatoes were then dried with 60°C (140°F) air to achieve a 12% moisture loss. The cut potatoes were then battered. The dry batter included starch at 73.22% total weight of the dry batter. The dry batter included flour at 19.42% total weight of the dry batter. The dry batter included salt at 2.43% total weight of the dry batter. The batter included sodium acid pyrophosphate at 1.07% total weight of the dry batter. The batter included baking soda at 0.73% total weight of the dry batter. The batter included gum powder at 0.05% total weight of the dry batter. The batter also included calcium chloride at 2.91% total weight of the dry batter. The batter further includes Dextrose at 0.17% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67°C (350°F) and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 2.9% | 75.35 | 0.006 |
| 2 | 2.9% | 76.28 | 0.006 |
| 3 | 2.9% | 74.92 | 0.004 |
| Ave | x | 75.52 | 0.005 |
| St. Dev | x | 0.70 | 0.001 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 58.26 | 0.120 | 0 | x |
| 2 | 56.47 | 0.124 | 0 | x |
| 3 | 55.67 | 0.136 | 0 | x |
| Ave | 56.80 | 0.127 | 0 | 100.00% |
| St. Dev | 1.33 | 0.008 | 0 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | 39.08 | 0.160 | 36 | x | 73.8 |
| 2 | 38.58 | 0.180 | 39 | x | 72.5 |
| 3 | 37.70 | 0.183 | 78 | x | 66.4 |
| Ave | 38.45 | 0.174 | 51 | 84.55% | 70.9 |
| St. Dev | 0.70 | 0.013 | 23 | x | 4.0 |

### Example 9 - 3.0% Calcium Chloride (Dry Batter), No Dextrose, Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89°C (165°F). The cut potatoes were then dried with 60°C (140°F) air to achieve a 12% moisture loss. The cut potatoes were then battered. The dry batter included starch at 73.20% total weight of the dry batter. The dry batter included flour at 19.42% total weight of the dry batter. The dry batter included salt at 2.43% total weight of the dry batter. The batter included sodium acid pyrophosphate at 1.07% total weight of the dry batter. The batter included baking soda at 0.73% total weight of the dry batter. The batter included gum powder at 0.05% total weight of the dry batter. The batter also included calcium chloride at 3.00% total weight of the dry batter. The batter further includes a colorant (caramel and Annatto blend) at 0.01% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67°C (350°F) and the potatoes were cooked for 2 minutes and 30 seconds. The cooked potatoes were then cooled. Three random samples were taken during various steps in the process to test characteristics of the samples.

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | x | x | x | x |
| 2 | 57.03 | 0.156 | 10 | x |
| 3 | 56.37 | 0.130 | 10 | x |
| Ave | 56.70 | 0.143 | 10 | 81.10% |
| St. Dev | 0.47 | 0.018 | 0 | x |

After reconstitution, the potato fries exhibited the following attributes:

| | ***After Refry*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | x | x | x | x | x |
| 2 | 39.36 | 0.181 | 60 | x | 62.5 |
| 3 | 37.38 | 0.184 | 58 | x | 64.0 |
| Ave | 38.37 | 0.183 | 59 | 82.12% | 63.3 |
| St. Dev | 1.40 | 0.002 | 1 | x | 1.1 |

### Example 10 - 6.0% Calcium Chloride (Dry Batter), No Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89°C (165°F). The cut potatoes were then dried with 60°C (140°F) air to achieve a 12% moisture loss. The cut potatoes were then battered. The dry batter included starch at 71.33% total weight of the dry batter. The dry batter included flour at 18.87% total weight of the dry batter. The dry batter included salt at 2.36% total weight of the dry batter. The batter included sodium acid pyrophosphate at 1.04% total weight of the dry batter. The batter included baking soda at 0.71% total weight of the dry batter. The batter included gum powder at 0.05% total weight of the dry batter. The batter also included calcium chloride at 5.66% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67°C (350°F) and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 5.66% | 76.34 | 0.004 |
| 2 | 5.66% | 75.70 | 0.005 |
| 3 | 5.66% | 76.63 | 0.003 |
| Ave | x | 76.22 | 0.004 |
| St. Dev | x | 0.48 | 0.001 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 54.05 | 0.238 | 0 | x |
| 2 | 57.41 | 0.201 | 0 | x |
| 3 | 58.86 | 0.205 | 0 | x |
| Ave | 56.77 | 0.215 | 0 | 100.00% |
| St. Dev | 2.47 | 0.020 | 0 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | 36.28 | 0.291 | 26 | x | 69.9 |
| 2 | 38.91 | 0.300 | 36 | x | 68.5 |
| 3 | 39.65 | 0.283 | 21 | x | 69.9 |
| Ave | 38.28 | 0.291 | 28 | 91.52% | 69.4 |
| St. Dev | 1.77 | 0.009 | 8 | x | 0.8 |

### Example 11 - 6.0% Calcium Chloride (Dry Batter), Dextrose, No Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89 °C (165°F). The cut potatoes were then dried with 60°C (140°F) air to achieve a 12% moisture loss. The cut potatoes were then. The dry batter included starch at 71.16% total weight of the dry batter. The dry batter included flour at 19.42% total weight of the dry batter. The dry batter included salt at 2.43% total weight of the dry batter. The batter included sodium acid pyrophosphate at 1.07% total weight of the dry batter. The batter included baking soda at 0.73% total weight of the dry batter. The batter included gum powder at 0.05% total weight of the dry batter. The batter also included calcium chloride at 5.66% total weight of the dry batter. The batter further includes Dextrose at 0.17% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67°C (350°F) and the potatoes were cooked for 2 minutes and 30 seconds. The cooked potatoes were then cooled. Three random samples were taken during various steps in the process to test characteristics of the samples. In a raw state, the potato fries exhibited the following attributes:

| | ***Dry Batter*** | ***Raw*** | |
|---|---|---|---|
| Sample | Percent Calcium Chloride | Moisture Content (g/100g) | Calcium (g/100g) |
| 1 | 5.66% | 76.94 | 0.005 |
| 2 | 5.66% | 77.65 | 0.007 |
| 3 | 5.66% | 76.02 | 0.005 |
| Ave | x | 76.87 | 0.006 |
| St. Dev | x | 0.82 | 0.001 |

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | 56.57 | 0.251 | 0 | x |
| 2 | 58.73 | 0.222 | 0 | x |
| 3 | 57.56 | 0.236 | 0 | x |
| Ave | 57.62 | 0.236 | 0 | 100.00% |
| St. Dev | 1.08 | 0.015 | 0 | x |

After reconstitution, the potato fries exhibited the following attributes:

| | ***After Reconstitution*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | 39.36 | 0.331 | 28 | x | 70.6 |
| 2 | 38.14 | 0.296 | 31 | x | 71.0 |
| 3 | 39.05 | 0.318 | 33 | x | 69.7 |
| Ave | 38.85 | 0.315 | 31 | 90.61% | 70.4 |
| St. Dev | 0.63 | 0.018 | 3 | x | 0.7 |

### Example 12 - 6.0% Calcium Chloride (Dry Batter), No Dextrose, Colorant

Russet potatoes were washed and peeled. The washed and peeled potatoes were tempered for 30 minutes in a bath of water. The water had a temperature of 54,44°C (130°F). The tempered potatoes were cut with a water knife to a thickness of approximately 0,751 cm (0.296 inches). The cut potatoes were then blanched 10 minutes in a bath of hot water having a temperature of 73,89°C (165°F). The cut potatoes were then dried with 60°C (140°F) air to achieve a 12% moisture loss. The cut potatoes were then battered. The dry batter included starch at 70.87% total weight of the dry batter. The dry batter included flour at 18.87% total weight of the dry batter. The dry batter included salt at 2.36% total weight of the dry batter. The batter included sodium acid pyrophosphate at 1.04% total weight of the dry batter. The batter included baking soda at 0.71% total weight of the dry batter. The batter included gum powder at 0.05% total weight of the dry batter. The batter also included calcium chloride at 6.00% total weight of the dry batter. The batter further includes a colorant (caramel and Annatto blend) at 0.01% total weight of the dry batter.

The battered potatoes were then par-fried in oil for 50 seconds at a temperature of 187,78-190,56°C (370-375°F). The par-fried potatoes were then frozen and divided into 1.5 pound bags. The frozen potatoes were then reconstituted in a fryer at atmospheric pressure. The oil of the fryer had an initial oil temperature of 176,67°C (350°F) and the potatoes were cooked for 2 minutes and 30 seconds. The cooked potatoes were then cooled. Three random samples were taken during various steps in the process to test characteristics of the samples.

After the par-fry, the potato fries exhibited the following attributes:

| | ***After Par-Fry*** | | | |
|---|---|---|---|---|
| Sample | Moisture Content (g/100g) | Calcium (g/100g) | Acrylamide (AA) (ppb) | AA percent decrease from Control Average |
| 1 | x | x | x | x |
| 2 | 57.69 | 0.303 | 10 | x |
| 3 | 56.66 | 0.301 | 10 | x |
| Ave | 57.18 | 0.302 | 10 | 81.10% |
| St. Dev | 0.73 | 0.001 | 0 | x |

After reconstitution, the potato fries exhibited the following attributes:

| | ***After Refry*** | | | | |
|---|---|---|---|---|---|
| Sample | Moisture Content (g/100g) | Calcium (g/100g) | Acrylamide (AA) (ppb) | AA percent decrease from Control Average | Agtron Color |
| 1 | x | x | x | x | x |
| 2 | 35.98 | 0.359 | 38 | x | 64.4 |
| 3 | 36.16 | 0.324 | 35 | x | 63.9 |
| Ave | 36.07 | 0.342 | 37 | 88.78% | 64.2 |
| St. Dev | 0.13 | 0.025 | 2 | x | 0.4 |

### Example 13 - Color Comparison

The average color for each of the above examples 1-12 was compared. A target reflective value of 63 was chosen in that it represents a color that is golden yellow. Generally, a color value that is within 5 of the target color is considered acceptable for potato fries for most consumers. The target color was subtracted from the average color value for each sample to obtain a deviation as indicated below:

| **Color Comparison** | | | |
|---|---|---|---|
| **Example** | **Average Color** | **Target Color** | **Deviation** |
| 1 | 64.8 | 63 | 1.8 |
| 2 | 60.2 | 63 | -2.8 |
| 3 | 56.4 | 63 | -6.6 |
| 4 | 78.7 | 63 | 15.7 |
| 5 | 76.3 | 63 | 13.3 |
| 6 | 63.0 | 63 | 0 |
| 7 | 72.0 | 63 | 9 |
| 8 | 70.9 | 63 | 7.9 |
| 9 | 63.3 | 63 | 0.3 |
| 10 | 69.4 | 63 | 6.4 |
| 11 | 70.4 | 63 | 7.4 |
| 12 | 64.2 | 63 | 1.2 |

As can be seen from the tables above, examples 1-3 did not include calcium chloride. The potato fries get darker when dextrose is added to the batter as indicated in example 2. As indicated in example 3, the addition of a colorant caused a fairly significant increase in darkness of the potato fry. Examples 4-12, include samples that include varying levels of calcium chloride as indicated above. Examples 4, 7, and 10 include calcium chloride but do not include any type of colorant. As can be seen the samples related to examples 4, 7 and 10 all include a darkness that is greater than about 70. Examples 5, 8, and 11 include samples that were treated with calcium chloride and include dextrose. As can be seen, as the amount of calcium chloride is increased, the effect of the dextrose on the darkness of the potato fry lessens. Examples 6, 9 and 12 include samples that were treated with calcium chloride and include a colorant. As can be seen from the examples each has a color value that is very near the target of 63. From the above examples, dextrose, colorant and combinations of dextrose and color can be used to obtain an acceptable color value for a potato fry that has been treated with calcium chloride.

### Example 14 - Acrylamide Comparison

The average acrylamide levels for each of the above examples 1-12 were compared. Example 2 was chosen as the control for this comparison because Example 2 was treated to have an acceptable color but was not treated to reduce acrylamide formation. The reduction in Acrylamide is indicated below.

| **Acrylamide Comparison** | | | | |
|---|---|---|---|---|
| **Example** | **Average Acrylamide** | **Control** | **Reduction (Ppb)** | **Percentage Reduction** |
| 1 | 161 | 330 | 169 | 51.21% |
| 2 | 330 | 330 | 0 | 0.00% |
| 3 | 306 | 330 | 24 | 7.27% |
| 4 | 66 | 330 | 264 | 80.00% |
| 5 | 88 | 330 | 242 | 73.33% |
| 6 | 126 | 330 | 204 | 61.81% |
| 7 | 44 | 330 | 286 | 86.67% |
| 8 | 51 | 330 | 279 | 84.55% |
| 9 | 59 | 330 | 271 | 82.12% |
| 10 | 28 | 330 | 302 | 91.52% |
| 11 | 31 | 330 | 299 | 90.61% |
| 12 | 37 | 330 | 293 | 88.78% |

As can be seen from the tables above, examples 1-3 did not include calcium chloride. Example 2 includes dextrose and example 3 includes a colorant. As can be seen, example 2 includes the greatest acrylamide level. As can be seen, all of the samples that were treated with the calcium chloride had a drop in acrylamide of at least 60% in relation to the control. A reduction of greater than 80% and 90% were achieved as the percentage of calcium chloride increased in the samples. Example 6 includes greater than 60% reduction in acrylamide along with an acceptable color at 63. Example 9 includes greater than 80% reduction in acrylamide along with an acceptable color at 63.3. Example 12 includes greater than 88% reduction in acrylamide along with an acceptable color of 64.2. As can be seen from the examples that include dextrose (examples 5, 8, and 11), they show a reduced level of acrylamide as compared to the colorant and a slightly darker color than the control for the calcium chloride content level. This result was unexpected in that dextrose is a sugar that typically causes an increase in acrylamide levels in potato fries.

### CONCLUSION

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A process for mitigating acrylamide formation in potato fries, the process comprising:
applying a batter to uncooked potato fries, wherein the batter includes:
an acrylamide mitigation component from about 0.1 % to about 8.0% total weight of the dry mix of the batter, and
a color augmenter;
wherein the uncooked potato fries are capable of yielding reconstituted potato fries that have an average acrylamide level reduction of greater than 25% in comparison to an untreated control, wherein the potato fries have an average reflective value of less than 70.

2. The process of claim 1, wherein the uncooked potato fries are uncooked sweet potato fries.

3. The process according to any of claims 1-2, wherein the acrylamide mitigation component is a metal salt.

4. The process according to any of claims 1-2, wherein the acrylamide mitigation component is a divalent metal salt.

5. The process according to any of claim 1-2, wherein the acrylamide mitigation component is calcium chloride.

6. The process according to any of claims 1-5, wherein the color augmenter includes a colorant.

7. The process of claim 6, wherein the colorant includes at least one member of a group comprising: caramel, annatto, and Turmeric.

8. The process of claim 1-5, wherein the color augmenter includes a browning agent.

9. The process of claim 8, wherein the browning agent is dextrose.

10. The process according to any of claims 1-9, wherein the potato fries are rectangular cross section shoestring cut potato fries having a thickness from 0.13cm to 1.27cm (0.05 inches to 0.50 inches) and a length from 50.8cm to 12.70cm (2.0 inches to 5.0 inches).

11. The process according to any of claims 1-10, wherein the potato fries are capable of yielding reconstituted potato fries that have an average acrylamide level less than 200 ppb and an average reflectance value of less than 70 when the potato fries are reconstituted for 2.0 minutes to 4.0 minutes in an oil having a temperature from 148.89°C to 204.44°C (300°F to 400°F).

## Patentansprüche

1. Verfahren zur Minderung der Acrylamid-Bildung in Pommes Frites, wobei das Verfahren Folgendes umfasst:
Auftragen eines Teigs auf unfrittierte Pommes Frites, wobei der Teig Folgendes enthält:
eine Acrylamid-Minderungskomponente von etwa 0,1% bis etwa 8,0% des Gesamtgewichts der trockenen Mischung des Teigs und
einen Farbverstärker;
wobei die unfrittierten Pommes Frites rekonstituierte Pommes Frites liefern können, die eine durchschnittliche Verringerung des Acrylamidgehalts von mehr als 25% im Vergleich zu einem unbehandelten Kontrollprodukt aufweisen, wobei die Pommes Frites einen mittleren Reflexionswert von weniger als 70 aufweisen.

2. Verfahren nach Anspruch 1, wobei die unfrittierten Pommes Frites unfrittierte Pommes Frites aus Süßkartoffeln sind.

3. Verfahren nach einem der Ansprüche 1 bis 2, wobei die Acrylamid-Minderungskomponente ein Metallsalz ist.

4. Verfahren nach einem der Ansprüche 1 bis 2, wobei die Acrylamid-Minderungskomponente ein zweiwertiges Metallsalz ist.

5. Verfahren nach einem der Ansprüche 1 bis 2, wobei die Acrylamid-Minderungskomponente Calciumchlorid ist.

6. Verfahren nach einem der Ansprüche 1 bis 5, wobei der Farbverstärker einen Farbstoff enthält.

7. Verfahren nach Anspruch 6, wobei der Farbstoff mindestens ein Mitglied einer Gruppe enthält, die aus Folgendem besteht: Karamell, Annatto und Kurkuma.

8. Verfahren nach Anspruch 1 bis 5, wobei der Farbverstärker ein Bräunungsmittel umfasst.

9. Verfahren nach Anspruch 8, wobei das Bräunungsmittel Dextrose ist.

10. Verfahren nach einem der Ansprüche 1 bis 9, wobei der rechteckige Querschnitt der in dünne Streifen geschnittenen Pommes Frites eine Dicke von 0,13 cm bis 1,27 cm (0,05 Zoll bis 0,50 Zoll) und eine Länge von 5,08 cm bis 12,70 cm (2,0 Zoll bis 5,0 Zoll) aufweist.

11. Verfahren nach einem der Ansprüche 1 bis 10, wobei die Pommes Frites rekonstituierte Pommes Frites liefern können, die einen mittleren Acrylamidgehalt von weniger als 200 ppb und einen durchschnittlichen Reflexionsgrad von weniger als 70 aufweisen, wenn die Pommes Frites für 2,0 Minuten bis 4,0 Minuten in einem Öl mit einer Temperatur von 148,89° C bis 204,44° C (300° F bis 400° F) rekonstituiert werden.

## Revendications

1. Procédé d'atténuation de la formation d'acrylamide dans des frites, le procédé consistant à :
appliquer une composition de friture sur des frites crues, la composition de friture contenant :
un constituant d'atténuation d'acrylamide représentant d'environ 0,1 % à environ 8,0 % du poids total du mélange sec de la composition de friture, et
un intensificateur de couleur,
les frites crues étant capables de produire des frites cuites présentant une réduction du niveau d'acrylamide moyen supérieure à 25 % par comparaison avec un témoin non traité, les frites ayant une valeur de réflectance moyenne inférieure à 70.

2. Procédé selon la revendication 1, dans lequel les frites crues sont des frites de patate douce crues.

3. Procédé selon l'une quelconque des revendications 1-2, dans lequel le constituant d'atténuation d'acrylamide est un sel métallique.

4. Procédé selon l'une quelconque des revendications 1-2, dans lequel le constituant d'atténuation d'acrylamide est un sel de métal divalent.

5. Procédé selon l'une quelconque des revendications 1-2, dans lequel le constituant d'atténuation d'acrylamide est le chlorure de calcium.

6. Procédé selon l'une quelconque des revendications 1-5, dans lequel l'intensificateur de couleur comprend un colorant.

7. Procédé selon la revendication 6, dans lequel le colorant comprend au moins un élément du groupe constitué du caramel, de l'annatto, et du curcuma.

8. Procédé selon l'une quelconque des revendications 1-5, dans lequel l'intensificateur de couleur comprend un agent de brunissage.

9. Procédé selon la revendication 8, dans lequel l'agent de brunissage est le dextrose.

10. Procédé selon l'une quelconque des revendications 1-9, dans lequel les frites sont des frites fines à section transversale rectangulaire ayant une épaisseur de 0,13 cm à 1,27 cm (0,05 pouce à 0,50 pouce) et une longueur de 5,08 cm à 12,70 cm (2,0 pouces à 5,0 pouces).

11. Procédé selon l'une quelconque des revendications 1-10, dans lequel les frites sont capables de produire des frites cuites présentant un niveau d'acrylamide moyen inférieur à 200 ppb et une valeur de réflectance moyenne inférieure à 70 quand les frites sont cuites pendant 2,0 minutes à 4,0 minutes dans une huile à une température de 148,89 °C à 204,44 °C (300 °F à 400 °F).
